# EUROPÄISCHE PATENTSCHRIFT

(11) **EP 2 376 402 B1**
(45) Veröffentlichungstag und Bekanntmachung des Hinweises auf die Patenterteilung: **09.02.2022**
(21) Anmeldenummer: 09806072.6
(22) Anmeldetag: 10.12.2009
(51) Int. Cl.: C04B 37/02, B23K 1/00, B23K 1/19, B23K 3/08, F23Q 7/00, F23Q 7/22

(54) **VERFAHREN ZUR HERSTELLUNG VON METALL-KERAMIK-VERBINDUNGEN**
METHOD OF PRODUCING METAL-CERAMIC BONDING
PROCÉDÉ POUR LA PRODUCTION DE LIAISONS MÉTAL-CÉRAMIQUE

(30) Priorität: 11.12.2008 DE 102008061308
(43) Veröffentlichungstag der Anmeldung: 19.10.2011
(73) Patentinhaber: Surface Igniter LLC a Delaware Limited Liability Company, Maryville, TN 37801 (US)
(72) Erfinder: HEUBERGER Martin, 66111 Saarbrucken (DE)
(74) Vertreter: Pietruk, Claus Peter
(86) Internationale Anmeldenummer: PCT/DE2009/001734
(87) Internationale Veröffentlichungsnummer: WO 2010/066243

(56) Entgegenhaltungen:
- WO-A1-01/38254
- DE-A1- 3 806 153
- DE-A1- 10 055 910
- DE-A1-102006 016 566
- JP-A- 2008 117 993
- US-B2- 7 441 688

## Beschreibung

Die vorliegende Erfindung betrifft das oberbegrifflich Beanspruchte und befasst sich demgemäß mit der Verbindung von Metallen mit Keramik.

Moderne Hochleistungskeramiken finden eine Vielzahl von Anwendungen, bei denen Keramikmaterial sich besonders eignet, weil es den starken Belastungen besonders gut widerstehen kann. Typisch muss für derartige Anwendungen ein Übergang zwischen der Keramik und anderen Materialien hergestellt werden, beispielsweise, um das Keramikmaterial zu fixieren und/oder einen elektrisch leitenden Übergang zu diesem herzustellen. Da sich Materialien an solchen Übergängen typisch erheblich unterscheiden, ist es schwierig, diese preiswert und haltbar herzustellen. Dies schränkt die Anwendbarkeit von Keramiken beachtlich ein.

Eine wichtige Anwendung von Keramiken wie Siliciumkarbidkeramiken ist die Verwendung für die Herstellung von elektrischen Glühzündern. Glühzünder werden funktionsbedingt häufig thermisch zykliert, was zu besonderen Belastungen auch und vor allem an Anschlussbereichen führt, weil die Wärmeausdehnung von Keramik und dem Metall des elektrischen Anschlusses in der Regel differiert.

Die DE 197 34 211 C2 befasst sich mit Aktivloten. Unter einem Aktivlot will die DE 197 34 211 C2 dabei ein Lot verstehen, das eine reaktive Komponente enthält. Wird etwa eine Oxidkeramik verlötet, so ist nach DE 197 34 211 C2 unter reaktiver Komponente eine Komponente zu verstehen, die eine hinreichend große Affinität zu Sauerstoff aufweist. Wird ein Werkstoff auf der Basis von Kohlenstoff verlötet, so soll unter reaktiver Komponente eine Komponente zu verstehen sein, die eine hinreichend große Affinität zu Kohlenstoff aufweist. Vorgeschlagen wird dann ein Verfahren zum Verbinden zweier Keramiken oder einer Keramik mit einem Metall, indem eine Oberfläche einer Keramik mit Ti, Zr, Hf, V, Cr oder Nb mechanisch beschichtet wird, indem ein aus Ti, Zr, Hf, V, Cr oder Nb bestehender Stab oder ein aus Ti, Zr, Hf, V, Cr 30 oder Nb bestehendes Blech auf der Oberfläche der Keramik verrieben wird und die beschichtete Oberfläche mit der Oberfläche einer weiteren, in gleicher Weise beschichteten Keramik oder mit der Oberfläche eines Metalls verlötet wird. Es wird in dem Dokument auch erwähnt, dass bei der Verbindung von Aluminiumoxid mit Titan als Lotbedingungen insbesondere die Lottemperatur und der während der Lötung herrschende Druck der an der Reaktion beteiligten Stoffe so zu wählen sind, dass die Bildungsenthalpie der reaktiven Komponente kleiner ist als die Bildungsenthalpie der Keramik. Beschrieben wird dann ein Ausführungsbeispiel, bei dem Lot auf die beschichtete Flache gelegt wird, der metallische Gegenstand darauf gesetzt und die Keramik zusammen mit dem metallischen Gegenstand auf über 900 °C in einem Vakuumofen erhitzt und anschließend abgekühlt wird. Es wird die Bedeutung des im Vakuumofen dabei herrschenden Drucks erwähnt.

Aus der US PS 6,078,028 ist ein Verfahren zur Kontaktierung eines Heißkeramikelementes bekannt, bei welchem eine elektrokonduktive Keramik mit einem Aktivmetalllot verbunden wird und ein Metallanschluss chemisch mit dem Aktivmetalllot verbunden wird.

Die Verwendung von Vakuumöfen bei der Herstellung von Verbindungen ist aufwendig und verteuert die zu fertigenden Gegenstände.

Aus der DE 100 55 910 A1 ist ein Verfahren zur Herstellung einer Keramik-Metallverbindung bekannt, wobei eine aktive Lotkomponente auf die Keramik und das zu verbindende Metall auf die Oberfläche aufgebracht wird, und wobei ein elektrischer Stromfluss durch die Übergangsstelle bewirkt wird, bis eine gewünschte Verbindung erzielt ist. Dabei soll die Schmelze auf eine Temperatur erwärmt werden, die ausreicht, um im Kontaktbereich Oxide und/oder Oxidschichten zu reduzieren. Das bekannte Verfahren soll an Umgebungsluft, das heißt in Umgebungsatmosphäre ausgeführt werden.

Während das Verfahren nach DE 100 55 910 A1 zwar durch die Möglichkeit, die Verbindung in Umgebungsatmosphäre zu bewirken, vorteilhaft ist, kann die Qualität der entsprechenden Verbindungen noch verbessert werden.

In der WO 01/38254 A1 wurde ein Bauteil angegeben, das ein bestimmtes Widerstands-Temperaturverhalten aufweist. Es wird dabei erörtert, dass die Verbindung von Metall mit Keramik aufgrund unterschiedlicher Wärmeausdehnung zu muschelförmigem Ausbrechen neigt und es wird die Umwicklung eines Wickelleiters mit dünner Aluminiumfolie zur Vermeidung dieses Phänomens vorgeschlagen bzw. alternativ die Verwendung eines bestimmten titanhaltigen Aktivlotes.

Die DE 10 2006 016 566 befasst sich mit dem Fügen zweier geometrisch besonders zur Erleichterung des Fügens geformter Teile und gibt an, dass die zu fügenden Teile unter einem Druck beim Löten gehalten werden, wobei ein Aufrechterhalten des Drucks erwähnt wird.

Aus der DE 38 06 153 A1 ist ein Verfahren zum Zusammenfügen von Keramikteilen bekannt, bei welchem eine Schicht von ultrafeinen Teilchen zwischen die zu fügenden Teile gelegt werden soll und das Schichtgefügte gepresst und erhitzt werden soll. Dabei soll Druck von einem Stempel ausgeübt werden. Es ist angegeben, dass durch die Antriebe der Öldruckanlagen ein Druck von 5 MPa ausgeübt wird.

Nach der US 7 441 688 B2 soll bei der Zusammenfügung von Teilen ein elastisches Element verwendet werden, weil bei der reaktiven Fügung das geschmolzene Material in Risse fließt, was die Höhe verringert und so den herrschenden Druck entlastet, sofern er nicht konstant gehalten wird. Aus diesem Grund wird auch eine aktive Rückkopplung vorgeschlagen.

Aus der JP 2008-117993 ist ein Thermokompressions-Bonding-Verfahren bekannt, bei welchem Bondingpunkte zwischen Halbleiterbauelementen hergestellt werden.

Es wäre wünschenswert, zumindest einen Teil der angesprochenen Probleme wenigstens partiell einer Linderung zuzuführen. Die Aufgabe der vorliegenden Erfindung besteht darin, Neues für die gewerbliche Anwendung bereitzustellen.

Die vorliegende Erfindung schlägt somit in einem ersten Grundgedanken ein Verfahren zur Herstellung einer im Gebrauch wiederholt thermisch hochzyklierten Keramik-Metall-Verbindung, bei welchem Metall und Keramik flächig miteinander verlötet werden, vor, wobei vorgesehen ist, dass Metall und Keramik kontrolliert gegeneinander angeordnet werden, indem vor substantieller Loterweichung die Metall-Keramik-Teile mit einem Stempel gegeneinander gepresst werden und bei Erweichung des Lotes der Stempel wegekontrolliert positioniert wird, um so die kontrollierte Gegeneinanderanordnung von Metall und Keramik zu erreichen .

Ein erster wesentlicher Aspekt der vorliegenden Erfindung hat somit erkannt, dass sich die Verbindung von Keramik und Metall wesentlich stabiler gestalten lässt, wenn diese während der Verbindungsherstellung kontrolliert gegeneinander angeordnet werden und nicht einfach nur eine Aufeinanderanordnung oder ein im wesentlichen nur durch die Unwägbarkeiten der Loterweichung gegebenes Anpressdruckverhalten gegeneinander gequetscht werden. Die mit der Erfindung erzielbaren Haftfestigkeiten, die sich einstellen, wenn auf eine elektrisch leitfähige Keramik eine elektrische Zuleitung aufgelötet wird, liegt deutlich über jenen, die mit der aufwändigeren Vakuumlöttechnik erreicht werden können. Dies ist auch nach oft wiederholter Erwärmung der Keramik der Fall, und zwar selbst dann, wenn diese auf sehr hohe Temperaturen wie deutlich über 600°C erwärmt wird und ungeachtet der flächigen Verbindung zwischen Keramik und Metall. Es wird kein Versagen durch Muschelbruch oder ähnliches beobachtet, wodurch eine ansonsten hochrelevante Versagensursache unbedeutend ist.

Dies ist womöglich darauf zurückzuführen, dass durch die kontrollierte Gegeneinanderanordnung des Materials zueinander keine oder allenfalls geringe relative Bewegungen stattfinden, die durch geschmolzenes Lot als Schwimm- oder Gleitbewegungen begünstigt wären, dass kein Lot zwischen der Fügestelle herausgequetscht wird, dass kein Lot im Übermaß in kapillare Öffnungen einer Sinterkeramik eingesogen wird und dergleichen. Dass alle diese Effekte im einzelnen zu den guten Eigenschaften beitragen und in welchem Umfang, ist aber keinesfalls notwendig und/oder gesichert. Dies alles trägt zu einer erhöhten Reproduzierbarkeit der Verbindung bei.

Als Metalle kommen insbesondere Aluminium, Nickel, Zink, Silber, Kupfer, Gold, aber auch technisch wichtige Legierungen, insbesondere Messing, in Frage. Damit können insbesondere für elektrotechnische Zwecke Verbindungen hergestellt werden; dass die Erfindung darüber hinaus auch auf anderen Gebieten Anwendung findet, sei erwähnt; dabei könnten auch andere Metalle Verwendung finden. Die als bevorzugt aufgeführten Metalle sind daher keinesfalls beschränkend gemeint, sondern lediglich für die elektrische Kontaktierung besonders bevorzugt.

Nickel ist als Metall besonders bevorzugt, weil es sich gut für die Herstellung von Hochtemperaturkabeln eignet und damit insbesondere dann eingesetzt werden kann, wenn Keramikglühzünder, insbesondere aus Siliciumkarbidkeramik, zu fertigen sind. Es kann zum Beispiel in Litzen-, Draht- oder Bandform eingesetzt werden.

Die Keramik wird typisch aus Oxidkeramik und Karbidkeramik ausgewählt; wiederum sei jedoch betont, dass gegebenenfalls andere Keramikmaterialien gleichfalls für die Erfindung geeignet sind; gegebenenfalls sind dann andere Erwärmungsmechanismen erforderlich als die direkte Widerstandsheizung, wie sie für die vorliegende Erfindung bevorzugt ist, insbesondere bei der Herstellung von Siliciumkarbid-Glühzündern. Prinzipiell wird aber einsichtig sein, dass die Verwendung der direkten Widerstandsheizung des Metall-Keramik-Übergangs schon wegen der technisch leichten Umsetzbarkeit besonders bevorzugt ist; um diese Heizungsart zu ermöglichen, wird es besonders bevorzugt, wenn die Keramik elektrisch hinreichend leitfähig ist. Von einem Metall-Keramik-Übergang wird im übrigen vorliegend einsichtigerweise auch dann gesprochen, wenn zwischen dem Metall und der Keramik ein Aktivlot angeordnet ist, die Metall- und/oder Keramikoberfläche zusätzlich berieben ist, wie beispielsweise in der DE 197 34 211 angegeben, oder dergleichen.

Als Lot wird typisch ein Aktivlot, wie es per se im Stand der Technik bekannt ist, verwendet. Insbesondere auf die einleitend zitierten Dokumente zum Stand der Technik sei dabei hingewiesen, ohne sich jedoch darauf zu beschränken.

Bei der Verwendung von Aktivlot sind Metalle bevorzugt, die hinreichend duktil sind. Auf diese Weise kann vermieden werden, dass die entstehende Verbindung mechanisch übermäßig bei der thermischen Zyklierung belastet wird. Wie einsichtig sein wird, wird die Lotschicht dabei dank des erfindungsgemäßen Verfahrens eine bestimmte (Minimal-)Dicke aufweisen, so dass durch derartiges thermisches Zyklieren verursachte mechanische Spannungen und dergleichen verringert werden.

Bei Widerstandserwärmung ist es besonders bevorzugt, Strom unmittelbar durch den zu erwärmenden Metall-Keramik-Übergang zu leiten; dass im übrigen andere Heizverfahren einsetzbar sind, wie beispielsweise induktives Heizen mit Hochfrequenz- oder anderen elektromagnetischen Wechselfeldern, sei erwähnt.

Die Gegeneinanderanordnung von Metall und Keramik erfolgt wegkontrolliert, das heißt Metall- und Keramikteile werden gegeneinander zumindest während der Phase, in welcher das Lot weich wird, weich beziehungsweise geschmolzen ist und/oder erhärtet, gegeneinander in festgelegter oder vorgegebener Position, insbesondere festgelegtem und/oder vorgegebenem Abstand zueinander angeordnet werden.

Die Metall- und Keramikteile werden mit einem Stempel gegeneinander gepresst, wobei der Stempel dann bei Loterweichung wegekontrolliert positioniert wird. Eines der Keramik- und Metallteile kann dabei auf einer Auflagerplatte, einem Amboss oder dergleichen auflagern, während der Stempel gegen das andere Teil gesetzt wird. Es kann vorgesehen sein, dass der Stempel anfänglich gegen die Teile mit einem definierten Druck gepresst wird, was dafür Sorge trägt, dass bereits anfänglich ein für die einsetzende Widerstandserwärmung ausreichender Strom mit gut verteilten Stromdichten fließen kann. Mit dem Erweichen des Lotes kann dann sichergestellt werden, dass ungeachtet des Anpressens und der dabei herrschenden Anpresskräfte der Stempel nicht beliebig weit ausgefahren wird, sondern wegekontrolliert gehalten wird. Dies kann auf unterschiedliche Art und Weise geschehen. So kann beispielsweise neben dem Anpressdruck der Weg mittels Sensoren erfasst werden.

In alternativer Weise wäre es auch möglich, lediglich einen Endanschlag vorzusehen, der die Annäherung von Metall und Keramik auf einen gegebenen, gewünschten Wert begrenzt. Ein solcher Anschlag kann "hart" gestaltet werden, indem er beispielsweise die Bewegung der Elektrode durch Auflage an einem Widerlager, das bevorzugt entsprechend der gewünschten Dicke der Übergangsschicht zwischen Metall und Keramik verstellbar ist, stoppt und/oder ein solches Widerlager kann nachgiebig gestaltet werden und/oder eine gegebene Nachgiebigkeitskurve besitzen, um während der Erweichung noch eine gewisse (geringe) Restbewegung zuzulassen und so die Wegstreckenkontrolle zu bewirken.

Es sei darauf hingewiesen, dass dann, wenn Druck- und Wegesensoren vorgesehen sind, während unterschiedlicher Phasen der Verbindungsherstellung die Sensorsignale auf unterschiedliche Weise berücksichtigt werden können, wobei typisch im Ansprechen auf den Ablauf einer bestimmten Erwärmungsdauer und/oder eine bestimmte, bereits erreichte und gegebenenfalls gemessene oder aus einem Strom-Spannungsverlauf etc. erschlossene Erwärmungstemperatur die Wegsensorsignale die Gegeneinanderanordnung von Metall und Keramik zumindest im wesentlichen, bevorzugt vollständig bestimmen werden. Es sei erwähnt, dass dort, wo von Drucksensoren gesprochen wird, einsichtigerweise auch Kraftsensoren einsetzbar wären.

In einer bevorzugten Variante kann zumindest die Verbindungsstelle in Schutzgas gespült oder geflutet werden. Es ist damit insbesondere nicht erforderlich, dass die Verbindung insgesamt im Vakuum hergestellt wird. Gleichwohl wäre das Verfahren auch im Vakuum ausführbar, was für einzelne Anwendungen sinnvoll sein mag, aber etwa bei Glühzündern aus Siliciumkarbidkeramik nicht erforderlich ist.

Die Metall-Keramik-Verbindung wird nach dem Erwärmen bevorzugt noch gehalten, das heißt fixiert, bis zumindest eine Erkaltung so weit gegeben ist, dass eine Bewegung von Metall und Keramik relativ zueinander zumindest verhindert ist. Dies kann in der gegebenen Position erfolgen und/oder unter Zulassung einer Entlastung der Übergangsstelle durch Wegbewegen eines Elektrodenstempels.

Es wird weiter eine Vorrichtung zum Widerstandslöten mit wenigstens einem Stempel zur Aneinanderordnung zu verbindender Keramik- und Metallteile und einem Stempelkontrollmittel offenbart, wobei die Stempelkontrollmittel zur Kontrolle einer Stempelposition ausgebildet sind.

Dabei wird auch offenbart, dass durch das Stempelkontrollmittel die Kontrolle der Stempelposition während des eigentlichen Verlötens möglich ist, das heißt, zu jenem Zeitpunkt, zu welchem das zwischen Keramik und Metall vorzusehende Lot erweicht beziehungsweise geschmolzen ist.

Offenbart sei auch, dass die Vorrichtung bevorzugt eine Stromquelle aufweisen wird, die den Metall-Keramik-Übergang durch Widerstandsheizen zu erwärmen vermag. Dabei ist einsichtig, dass diese Erwärmung die Miterwärmung eines zwischen dem Metall und der Keramik anzuordnenden Lotes mit umfasst. Es wird vorliegend nicht durchgehend erwähnt, dass dann, wenn von einer Keramik-Metall-Verbindung die Rede ist, in der Tat korrekter auf eine Metall-Lot-Keramik-Verbindung Bezug genommen werden könnte. Die Stromquelle wird bevorzugt so ausgelegt sein, dass die für die direkte Widerstandserwärmung erforderlichen Leistungen und Ströme bereitgestellt werden können, insbesondere mit vorgebbarem Strom- und/oder Spannungs- und/oder Leistungsverhalten beziehungsweise -verlauf.

Offenbart sei auch, dass die Vorrichtung überdies eine Schutzgasspülung aufweisen kann. Als Schutzgas kann jedes hinreichend inerte Gas wie Edelgase, gegebenenfalls Stickstoff und dergleichen verwendet werden. Die Schutzgasspülung ist dann erforderlich, wenn der Übergang erwärmt wird; damit ist es bevorzugt, wenn in der Vorrichtung Mittel zur Kontrolle des Schutzgasflusses in Abhängigkeit von der Übergangstemperatur, der Heizdauer usw. vorgesehen sind, also kein dauerhafter Schutzgasstrom vorgesehen wird.

Die offenbarten Stempelkontrollmittel können einen Wegesensor zur Bestimmung der Stempelposition aufweisen. Es kann also der Weg, um welchen der Stempel (an dem im Widerstandserwärmungsfall eine Elektrode angeordnet ist und/oder der diese Elektrode bildet) schon ausgefahren ist, erfasst werden. Dies ist besonders bevorzugt, weil, anders als beim Vorsehen nur eines Kraftsensors, beim Vorsehen eines Wegesensors kräftefrei gearbeitet werden kann. Dass daneben ein Kraftsensor insbesondere zur Begrenzung der maximal und vor allem vor Beginn der Erwärmung auf die Metall-Keramik-Teile angelegten Kräfte beziehungsweise Drücke vorgesehen sein kann, sei erwähnt.

Das bevorzugt vorzusehende Wegesignal beziehungsweise Positionssignal wird demgemäß bevorzugt zusätzlich zu anderen Sensorsignalen, insbesondere Kraftsensorsignalen, erfasst und zur Steuerung des Verfahrensablaufes herangezogen; dass diese Steuerung typisch durch eine speicherprogrammierbare Steuerung oder dergleichen geschehen kann, also in programmierter Weise, sei erwähnt.

Es sei im übrigen erwähnt, dass die eigentliche, am Stempel vorzusehende Elektrodenfläche komplementär zu der Geometrie der zu verbindenden Teile geformt sein kann. Dies ist besonders einfach bei Verwendung von Graphit für die Elektrode, da Graphit gut bearbeit- und damit konturierbar ist.

Alternativ und/oder zusätzlich kann eine Stempelbremse zur Begrenzung der Stempelbewegung vorgesehen sein. Diese kann betätigbar durch eine Steuerung sein, beispielsweise pneumatisch oder elektrisch, und so eine Stempelbewegung und damit den maximalen Stempeldruck begrenzen und/oder es kann ein einfacher Anschlag vorgesehen sein, der insbesondere einstellbar ist.

Die offenbarte Vorrichtung ist insbesondere zur Ausführung des erfindungsgemäßen Verfahrens einsetzbar. Dies gilt auch für die jeweils bevorzugten Ausführungsformen von Vorrichtung und Verfahren.

Mit der offenbarten Anordnung beziehungsweise dem erfindungsgemäßen Verfahren lassen sich besonders Siliziumkarbidglühzünder gut herstellen.

Offenbart sei, dass in einer besonders bevorzugten Variante der offenbarungsgemäß hergestellten Metall-Keramik-Verbundteile, insbesondere bei Siliciumkarbidglühzündern ist eine hinreichend dicke Lotschicht zwischen der Keramikoberfläche und dem eigentlich damit zu verbindenden Metall vorgesehen ist. So kann eine Lotschicht eine Dicke von zum Beispiel zwischen 0,2 mm, bevorzugt wenigstens 0,4 mm Dicke bis 1 mm Dicke, bevorzugt nicht mehr als 0,8 mm Dicke aufweisen. Der Bereich einer Dicke von 0,6 mm bis 0,8 mm Aktivlot ist insbesondere bei duktilen Aktivloten, wie Aluminium, insbesondere Reinaluminium besonders bevorzugt. Hier können Spannungen hinreichend gut aufgenommen werden. Das erfindungsgemäße Verfahren trägt dazu bei, dass die Schichtdicke ausreichend ist. Es sei darauf hingewiesen, dass ein offenbarungsgemäß zu verbindendes Keramikteil durch Aufbringen einer Metallisierung vorbereitet werden kann; auf die in der DE 197 34 211 erwähnten Verfahren wie CVD, PVD, Aufreiben, Flammsprühen, Sputtern und dergleichen sei hingewiesen.

Die Erfindung wird im Folgenden nur beispielsweise anhand der Zeichnung beschrieben. In dieser ist dargestellt durch:
- Fig. 1a: Vorrichtung zur Ausführung eines erfindungsgemäßen Verfahrens in schematischer Darstellung;
- Fig. 1b: die werkstückkontaktierenden Teile der Vorrichtung in dreidimensionaler Darstellung mit einem um das Metall geschlagenen Lotstück;
- Fig. 2: drei Phasen der Herstellung einer erfindungsgemäßen Verbindung

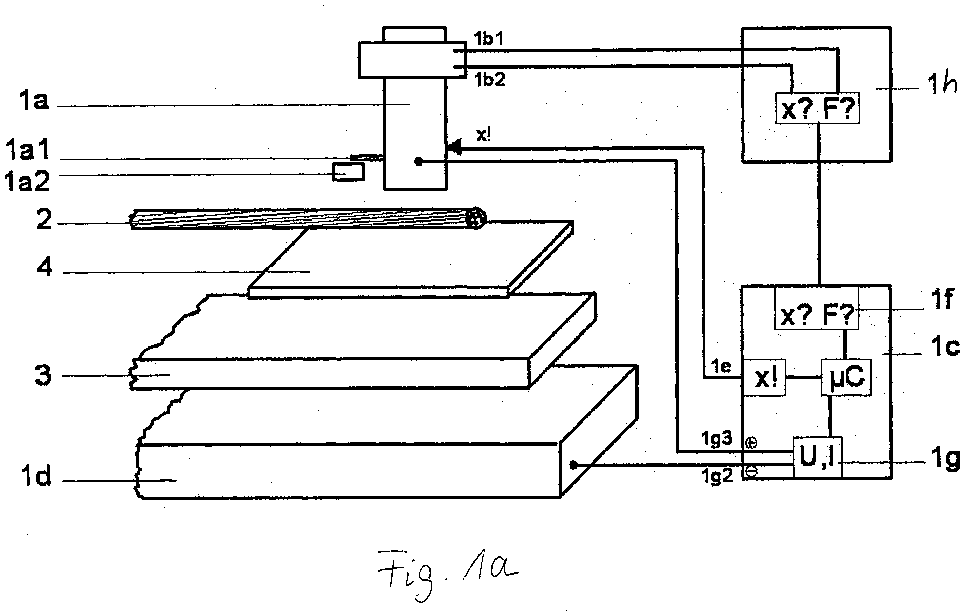

Nach Fig. 1a umfasst eine allgemein mit 1 bezeichnete Vorrichtung 1 zum Verbinden eines Metalles 2 mit einer Keramik 3 durch Lot 4 einen Stempel 1a und ein Stempelkontrollmittel 1b1, 1c, welches zur Kontrolle einer Stempelposition x, vergleiche Bezugszahl 5, ausgebildet ist.

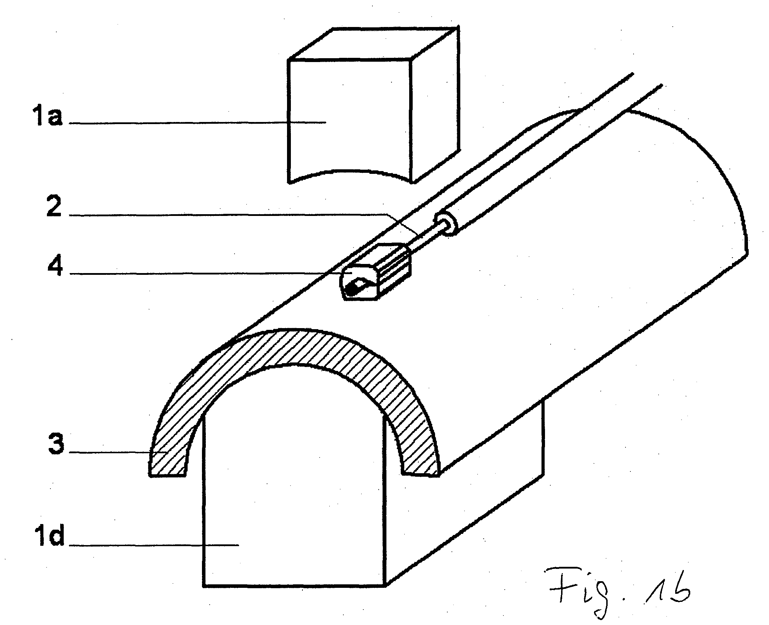

Die Vorrichtung 1 ist im vorliegenden Ausführungsbeispiel mit einer Steuerung 1c versehen, die den Ablauf der Verbindungsherstellung steuert, wie noch zu erläutern sein wird. Die Vorrichtung weist dazu beim Elektrodenstempel 1a einen Wegsensor 1b1 sowie einen Kraftsensor 1b2 auf, mit welchem die Anpresskraft des Elektrodenstempels gegen die zusammengelegten, zu fügenden und auf einer Gegenelektrode 1d liegenden Metall-Keramik-Teile presst. Es wird einsichtig sein, dass die Darstellung in Fig. 1 die Teile nicht direkt aufeinanderliegend zeigt, sondern aus Gründen der Übersichtlichkeit in einer schematischen Explosionszeichnung übereinander anordnet.

Der Elektrodenstempel 1a kann vorliegend, kontrolliert von der Steuerung 1c, bewegt werden, wozu ein pneumatischer oder elektromotorischer Aktuator (nicht gezeigt) vorgesehen ist, der im Ansprechen auf Steuersignale 1c betätigt werden kann, um den Stempel 1a um eine bestimmte Strecke x auszufahren. Die Steuerung 1c ist mit einem Mikrokontroller vorgesehen, um hierzu an einem Steuerausgang 1e ein Steuersignal für den Aktuator zu erzeugen. Die Steuerung 1c weist weiter einen Sensoreingang 1f auf, in welchen Sensoren 1b1, 1b2 Signale speisen, die wiederum die aktuelle Wegstrecke und den aktuellen Anpressdruck erfassen, mit welchem der Elektrodenstempel auf das zu fügende und auf der Gegenelektrode 1d aufliegende Materialpaket presst. Der Drucksensor 1b2 kann herkömmlich gebildet sein, beispielsweise mit Dehnungsmessstreifen; es versteht sich, dass an Stelle eines Anpressdruckes auch die Gesamtkraft, welche die Stempelelektrode ausübt, bestimmt werden kann; dies wird im Vorliegenden nicht weiter unterschieden.

Der Wegsensor 1b1 kann gleichfalls als herkömmlicher Wegsensor ausgebildet sein, beispielsweise mittels einer induktiv gekoppelten Schubstange, durch optische Abtastung eines Linien- oder anderen Musters, durch interferometrische Längenmessung oder dergleichen. Es versteht sich, dass für die jeweiligen Sensoren eine geeignete Signalkonditionierung 1h vorgesehen sein wird, welche hier ebenfalls nicht näher zu beschreiben ist und welche entweder die Sensorsignale vor Einspeisung in die Steuerung 1c konditioniert und/oder innerhalb der Steuerung 1c eine solche Konditionierung vornimmt.

Die Steuerung 1c ist weiter dazu ausgebildet, einen für das Widerstandslöten erforderlichen Strom über die Stempelelektrode la, das Metall 2, das Lot 4, die Keramik 3 in die Gegenelektrode 1d zu leiten. Dazu weist die Steuerung 1c eine Leistungsquelle 1g auf. Auf Grund des Ohmschen Widerstandes der einzelnen Elemente im Stromkreis erfolgt dabei eine Erwärmung, die zur Herstellung der Lotverbindung ausreicht, sofern der Strom hinreichend groß ist; abhängig davon, ob die Erwärmung überwiegend im Lot 4 erfolgt oder an anderer Stelle, beispielsweise in der Keramik 3 oder in zusätzlichen (nicht gezeigten) Heizelementen in der Gegenelektrode, der Stempelelektrode usw. wird von einer direkten oder indirekten Widerstandsheizung gesprochen. Die Steuerung 1c ist so ausgelegt, dass dort ein Strom beziehungsweise eine Spannung bereitgestellt wird, die für die Erwärmung der jeweiligen Teile ausreicht. Es sei im übrigen darauf hingewiesen, dass die Erwärmung durch Widerstandsheizung nicht zwingend ist und gegebenenfalls die Erwärmung auch auf anderem Wege erfolgen könnte, beispielsweise durch induktive Erwärmung des Lotes 4 oder dergleichen. Die Leistungsquelle 1g für elektrische Leistung ist über Leitungen 1g2, 1g3 mit den Elektroden 1a und 1b verbunden, die, wie aus dem Vorstehenden ersichtlich sein wird, elektrisch leitend sind und im übrigen den zu erwartenden Belastungen ohne weiteres widerstehen können; dazu sind sie hinreichend wärmebeständig im Hinblick auf die zur Erwärmung des vorgesehenen Lotes erforderlichen Temperaturen und massiv genug, um die zu erwartenden Kräfte aufzunehmen.

In Fig. 1 ist die Leistungsquelle 1g als Gleichspannungsquelle mit einem positiven und einem negativen Ausgangspol dargestellt; dies dient vor allem dazu, dem Betrachter der Figur schnell zu signalisieren, dass hier eine elektrische Leistungsquelle vorgesehen ist, soll die Erfindung jedoch nicht auf die Anwendung mit Gleichstrom beschränken. Es wird für den Fachmann verständlich sein, dass jedwede Form (elektrischer) Leistung, die geeignet ist, die erforderliche Erwärmung herbeizuführen, für die Zwecke der Erfindung geeignet ist.

Der bewegliche Elektrodenstempel 1a weist ein radial weg stehendes Anschlagelement 1a1 auf, welches zum Anschlag an einem als Ausfahrbegrenzung dienenden Auflager 1a2 vorgesehen ist. Bei Anlage des Anschlagselementes 1a1 an dem Auflager 1a2 ist eine weitere Verschiebung des Elektrodenstempels 1a in Richtung auf die Gegenelektrode hin einsichtigerweise nicht mehr möglich.

Das Metall 2 ist im vorliegenden Fall eine für Hochtemperaturzwecke isolierte (Isolierung nicht gezeigt, da im Verbindungsbereich entfernt) Nickellitze, wie sie beispielsweise für kommerzielle Glühzünder und dergleichen bereits eingesetzt wird.

Bei der Keramik 3 handelt es sich vorliegend um einen Glühzünderkörper 3 aus geeignet hergestellter Siliciumkarbidkeramik. Derartige Glühzünderkörper sind per se bekannt und brauchen hier nicht weiter beschrieben werden. Es wird einsichtig sein, dass die exakte Glühzündergeometrie eindeutig abweicht von der nur schematisch dargestellten etwa plattenartigen Form von Fig. 1. Bei einem tatsächlichen Glühzünder wird eine Kontaktierung nur in einem bestimmten Bereich abseits der Zone höchster Erwärmung vorgesehen.

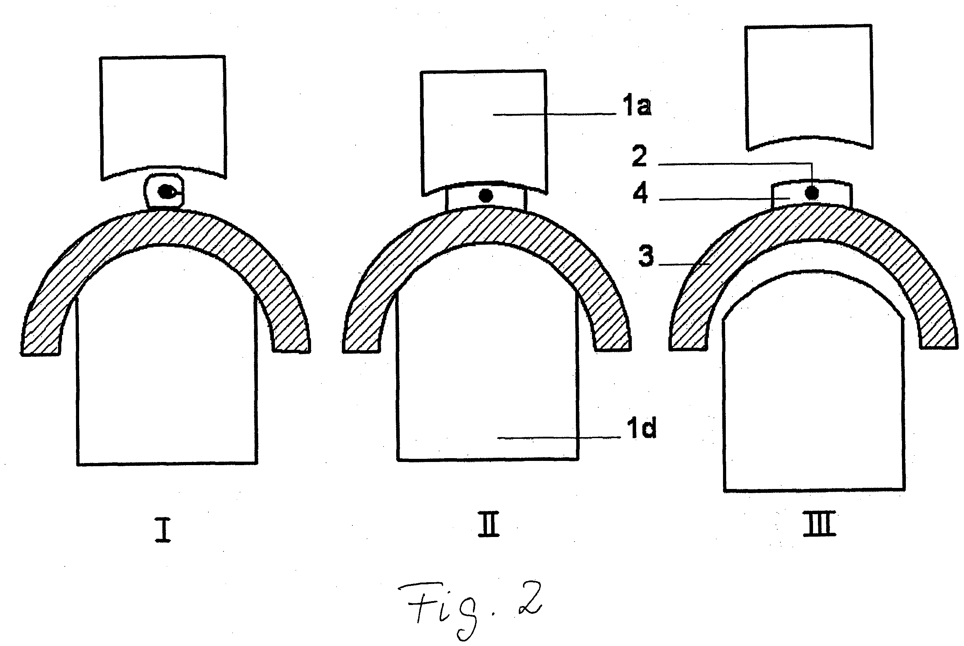

Die Gegenelektrode 1d ist komplementär zu der Kontur des Glühzünders 3 geformt, um ein Aufliegen des Glühzünders ohne hohe punktuelle Belastungen zu ermöglichen. Daher ist die Gegenelektrode 1d vorliegend als ebene Fläche dargestellt. Es sei darauf hingewiesen, dass auch der Stempel 1a komplementär geformt ist, und zwar wiederum zu dem Keramikteil, vgl. etwa die dreidimensionale Darstellung von Fig. 1b, und/oder zu der Form der Nickeldrahtlitze, das heißt des Metallteils 2. Dass dieses Metallteil mit Lot umgeben sein kann, vgl. Fig. 1 b oder Fig. 2, sei erwähnt. Es wird einsichtig sein, dass die Gegenelektrode 1d stationär sein kann und sich nur die Stempelelektrode 1a bewegt. Dies ist allerdings nicht zwingend erforderlich; vielmehr können auch zwei gegeneinander bewegliche und relativ zu einem Maschinengehäuse bewegliche Elektroden vorgesehen sein; auch ist es nicht erforderlich, dass die Stempelelektrode zum Metall hin angeordnet ist.

Auch eine umgekehrte Anordnung wäre denkbar, so dass der wegegesteuerte, bewegliche Elektrodenstempel am Keramikteil aufliegen würde. Es sei darauf hingewiesen, dass das Metallteil 2 als "nackter" Draht dargestellt ist. Dies ist aber nicht zwingend; das zu kontaktierende Metall kann auch zum Beispiel mit einer Hülse versehen sein. Insbesondere ist es möglich, die Litze zuvor mit einem Lot zu ummanteln oder zu umfassen, die Keramik zumindest an der Verbindungsstelle vorzubereiten, beispielsweise durch Aufsprühen geeigneter Aktivierungsmaterialien wie Flammensprühen, CVD-Aufbringung, PVD-Aufbringung usw., jeweils von hinreichend reaktiven Materialien wie Aluminium, Aufreiben von Metallen wie aus dem Stand der Technik bekannt usw. Obwohl die Erfindung bei Keramikglühzündern bevorzugt ist, ist dies nicht zwingend und es wird für den Fachmann einsichtig sein, dass die Erfindung mit einer Vielzahl von Materialkombinationen einsetzbar ist.

Das Lot 4 ist vorliegend ein geeignetes Aktivlot. Besonders bevorzugt ist als Aktivlot eines, welches hinreichend duktil ist, um im Erwärmungsfall der zu verbindenden Teile beziehungsweise bei der thermischen Zyklierung (insbesondere nach der Herstellung der Verbindung, bei welcher die Teile besonders stark erwärmt und anschließend auf Raumtemperatur abgekühlt werden) die auf Grund der unterschiedlichen Wärmeausdehnungen von Metall und Keramik entstehenden Spannungen gut aufzunehmen. Ein besonders geeignetes Aktivlot ist Aluminium, insbesondere hinreichend reines Aluminium. Das Lot wird in einer hinreichenden Dicke vorgesehen. Es sei erwähnt, dass die Zeichnung zwar nicht maßstabsgerecht ist, für typische Anwendungen aber eine Lotdicke zwischen 0,2 mm, bevorzugt wenigstens 0,4 mm, insbesondere um 0,8 mm verwendet wird. Darüberhinausgehende Lotdicken bringen kaum noch Vorteile hinsichtlich der mechanischen Spannungsaufnahme, zu geringe Lotdicken nehmen nicht genügend mechanische Spannung im thermischen Zyklierungsfall auf.

Das Auflager 1a2 hat eine einstellbare Anschlagsposition, wobei die Anschlagsposition relativ zu einer Anfangsposition des Elektrodenstempels einstellbar ist. Mit anderen Worten kann das Auflager 1a2 so positioniert werden, dass sich der bereits auf dem Paket aus Metallteil, Lot und Keramik aufsitzende Elektrodenstempel nur noch um eine vorgegebene Maximalwegstrecke bewegen kann. Der Anschlag muss nicht zwingend vorgesehen sein, wenn eine andere Wegstreckenbegrenzung vorgesehen ist. Er kann alternativ zu einer sensorischen Wegstreckenerfassung vorgesehen sein und wird hier nur aus Gründen der vollständigeren Erläuterung der Erfindung im selben Ausführungsbeispiel beschrieben, ohne dass, wie erwähnt, mehrere unterschiedliche Wegstreckenbegrenzungsmittel in einem Ausführungsbeispiel realisiert sein müssen.

Die Steuerung 1c ist vorliegend dazu ausgebildet, die vom Elektrodenstempel 1a ausgeübte Kraft, den Hub des Elektrodenstempels 1a zu erfassen und den Hub des Elektrodenstempels 1a zu steuern sowie eine geeignete Stromflusskurve des Stromflusses zur Widerstandsheizung vorzugeben. Darüber hinaus könnten, abhängig vom Automatisierungsgrad, noch andere Vorgänge gesteuert werden, zum Beispiel die Materialanfuhr oder ähnliches.

Die Vorrichtung wird verwendet wie folgt:
Zunächst werden die zu verbindenden Teile übereinander angeordnet und auf die Gegenelektrode 1d gelegt, das heißt, auf der Gegenelektrode liegt der Reihe nach von unten nach oben das Keramikelement 3, ein Lotstück 4 und das auf das Keramikelement 3 zu lötende Metallteil 2 in Form des abisolierten Nickeldrahtlitzenendes.

Es wird dann der Stempel 1a zunächst druckfrei bis an das Metallteil 2 heranbewegt. Die Anfangslage wird als Nulllage bestimmt. Das Auflager 1a2 für den Anschlag 1a1 wird so eingestellt, dass der Elektrodenstempel 1a von dieser Position aus noch um eine maximale Wegstrecke 5 bewegt werden kann, bis er in Anschlag gerät. Es sei darauf hingewiesen, dass bei hinreichend konstanten Dimensionen von Keramik, Lot und Metallteil eine solche Einstellung nicht für jedes Werkstück vorgenommen werden kann, dass aber gerade dann, wenn eine Sensorerfassung der Nullposition möglich ist, eine Nullung von Verbindungsteil zu Verbindungsteil klar bevorzugt ist.

Es wird dann begonnen, den Elektrodenstempel nach unten zu pressen. Die maximal aufzubringende Kraft wird dabei begrenzt, um eine Zerstörung der Werkteile zu vermeiden. Dies ist durch die Druckmessung möglich. Nun wird der Strom zur Widerstandsheizung eingeschaltet und die Teile beginnen, sich zu erwärmen. Zugleich kann eine Schutzgasspülung erfolgen, wobei die Schutzgaszufuhr aus Gründen der Übersichtlichkeit nicht dargestellt ist.

Mit der Erwärmung beginnt das Lot 4 zu erweichen, was dazu führt, dass der Stempel 1a sich nach unten bewegen kann. Dies wird als Nachlassen eines Druckes oder als Nach-unten-Bewegung erfasst und im Ansprechen darauf die Anpresskraft reduziert. Gleichzeitig kann die Heizleistung erforderlichenfalls verändert werden, um eine geeignete Aufheizkurve zu erhalten, in der die Teile nicht übermäßig schnell erwärmt werden und im übrigen noch Zeit für die Ausregelung der Elektrodenstempelbewegung gegeben ist.

Das Lot wird nun weiter erweicht und die gewünschte Verbindung entsteht; dabei wird die Kraft, mit welcher der Elektrodenstempel 1a gegen die Gegenelektrode presst, verringert, und zwar gegebenenfalls auf praktisch null. Dies wird erreicht, indem die Position der Stempelelektrode auf einem Sollwert gehalten wird. Dies verhindert wiederum, dass Lot 4 aus dem Bereich zwischen Metallteil 2 und Keramikteil 3 herausgepresst wird. Es bleibt also auch und auf Grund der Kapillarkräfte Lot 4 in einer gewissen Schichtdicke zwischen Metallteil 2 und Keramikteil 3 vorhanden. Die Weiterbewegung des Elektrodenstempels kann im übrigen zum Beispiel durch Wegnehmen der Anpresskraft, zum Beispiel aber auch durch eine geeignete Arretierung wie eine Pneumatikbremse, einen in der Warmphase erregten, den Elektrodenstempel fixierenden oder weghaltenden Elektromagneten oder dergleichen geschehen.

Für den Versagensfall der Steuerung beziehungsweise der Arretierung wird der Elektrodenstempel 1a mit seinem Anschlag 1a2 auf dem Auflager 1a2 aufsitzen, und zwar in einem solchen Abstand, dass ebenfalls noch eine hinreichende Lotschichtdicke zwischen Metall 2 und Keramik 3 verbleibt. Wie einsichtig sein wird und bereits erwähnt, reicht es gegebenenfalls, eine der Maßnahmen zu verwirklichen.

Nach der Erweichung, die beispielsweise durch das Kraft-Weg-Verhalten und die Strom-Spannungs-Kennlinienerfassung an der Steuerung 1c erfasst werden kann, und dem auf diese Weise gleichfalls erfassbaren Fortschreiten der Verbindungsherstellung kann der Strom abgestellt werden und eine Haltephase abgewartet werden. Diese kann beispielsweise durch Ablauf einer bestimmten Zeit und/oder durch Temperatursensoren (nicht gezeigt) bestimmt werden.

Nach Ablauf der Haltezeit kann der Elektrodenstempel in seine Ausgangsposition zurückgefahren werden, in welcher er von dem jetzt verbundenen Verbundteil abgehoben ist und das Verbundteil kann entnommen werden.

Die auf diese Weise erhaltenen Verbindungen sind von reproduzierbar hoher Qualität. Es werden Abziehkräfte, das heißt zur Entfernung des Metallteils von der Keramik aufzubringende Kräfte, erreicht, die etwa einen Faktor 2 besser sind als die mit konventionellem Vakuumlöten erzielbare Kräfte. Es sei erwähnt, dass die Steuerung 1c programmgesteuert arbeiten kann und ein entsprechendes Ablaufprogramm für einen Mikrokontroller oder dergleichen vorgesehen sein kann.

Ein so hergestellter Metall-Keramikglühzünder hat eine dicke Lotschicht zwischen Metall und Keramik, so dass er ohne Gefahr von Zerstörung häufig thermisch zykliert werden kann, ohne hierfür eine Herstellung im Vakuum zu benötigen.

Das geschilderte Verfahren und die geschilderte Vorrichtung sind nur beispielhaft. Als wichtige Varianten sei ohne Beschränkung auf folgende hingewiesen:
Anders als vorstehend erwähnt, muss die Erwärmung der Verbindungsstelle nicht dadurch geschehen, dass Strom über die Elektroden durch Metall, Lot und Keramik hindurchfließt und dabei aufgrund des ohmschen Widerstandes primär jene Schicht mit dem höchsten Spannungsabfall bewirkt, typisch also im Lot selbst. Vielmehr wäre es auch möglich, z.B. das Metall direkt an eine Spannungsquelle anzuschließen; hierbei können sowohl Zu- als auch Ableitung am Metall vorgesehen werden, wodurch sich in jedem Fall das Metall aufheizt und vom Metall Lot und Keramik miterwärmt werden; dass alternativ und/oder zusätzlich ein Anschluss der (gerade im Glühzünderbereich ja typisch) elektrisch leitfähigen Keramik an die zur Erwärmung benutzte Stromquelle vorgenommen werden kann, sei erwähnt. Weiter sei erwähnt, dass alternativ und/oder zusätzlich eine Erwärmung auch durch die Elektroden bewirkt werden kann; in diesem Fall werden die Elektroden oder eine daran angeordnete Heizfläche erwärmt. Dazu kann ein Heizelement an geeigneter Stelle vorgesehen werden, beispielsweise in Form eines Elektrodenschuhs. Das Heizelement kann insbesondere selbst aus elektrisch leitfähiger Keramik gebildet sein.

Anders als vorstehend beschrieben, braucht das hier durch Nickeldraht realisierte Metallstück nicht lediglich auf einem Metallstück aufliegen. Das mit der Keramik zu verbindende Metall kann auch in dem Lotmaterial eingebettet sein, z.B. indem ein Streifen des Lotmaterials um das zu verbindende Metallende geschlagen oder gelegt wird und/oder ein Stück Lotmaterial mit Ausnehmung, z.B. in Rohrform vorgesehen wird und das zu verbindende Metall in die Ausnehmung eingebracht wird. Dabei kann das Lotmaterial mit dem Metall (mechanisch vor-) verbunden werden, z.B. durch Quetschen bzw. Crimpen, was sicherstellt, dass sich Lot und Metall nicht bei der Handhabung trennen. Ein solches Umschlagen ist z.B. in Fig. 1 b gezeigt, wobei in dieser Figur auch ersichtlich ist, dass die Stempelelektrode - genau wie die Gegenelektrode - an die Kontur des zu verbindenden Keramikteils angepasst ist.

Dies zeigt sich auch in der Schnittansicht von Fig. 2, wo im Schnitt drei Phasen der Verbindungsherstellung gezeigt sind, nämlich Phase I vor Elektrodenannäherung, Phase II während des Schmelzens und Phase III nach Beendigung des Vorgangs.

Es sei erwähnt, dass das hier offenbarte Verbindungsverfahren, nach welchem Keramik und Metall durch Lot wegestreckenkontrolliert verbunden werden, auch für eine Reihe anderer Materialpaarungen eingesetzt werden kann. So seien besonders erwähnt Keramik-Keramik-Verbindungen und Metall-MetallVerbindungen, wobei - wie aus dem Vorstehenden ersichtlichjeweils eine Lotschicht vorgesehen wird. Bei einer Metall-Metall-Verbindung ist das Verfahren dort besonders vorteilhaft, wo zumindest eines der Metall stark erweicht, weil nach der erfindungsgemäßen Wegekontrolle dabei eine Deformation durch weiteres Herabdrücken des (Elektroden-)Stempels bzw. Zusammenpressen eines Stempels gegen ein Auflager vermieden wird. Es sei auch darauf hingewiesen, dass die Kombination aus Kraft- und Wegekontrolle nicht nur bei erweichenden Materialien Vorteile bietet, sondern vielmehr auch dort, wo zunächst die Kraft begrenzt werden muss, um eine Werkstückzerstörung zu vermeiden. Hier kann vorgesehen werden, dass bei anfänglicher Erweichung noch eine bestimmte Nachführung vorgenommen wird und erst dann eine Wegekontrolle das weitere Nachführen begrenzt. So lassen sich bei zerbrechlichen oder spröden Materialien wie Glas und dergl. gute Verbindungen herstellen, ohne dass anfänglich ein hoher Druck ausgeübt wird und die Lotdicke lässt sich gut einstellen, d.h. steuern und/oder regeln. Vor diesem Hintergrund wird einsichtig sein, dass die Erfindung geeignet ist zur Verbindung von wenigstens zwei Materialien miteinander, die jeweils ausgewählt sind aus der Gruppe Metall, insbesondere bei Lot-Wärme erweichendes Metall, Glas, Kunststoff, insbesondere thermoplastischer Kunststoff, Keramik. Dass in Einzelfällen andere als Lötverfahren zur Anwendung kommen können bei der wegkontrollierten Aneinanderanordnung sei gleichfalls erwähnt.

Anders als dargestellt, muss die Verbindung nicht zwingend in Schutzgasumflutung hergestellt werden. Es ist, abhängig von der Materialpaarung, auch möglich, eine Verbindung an Luft oder, bei besonders empfindlichen Materialien, auch in Vakuum vorzunehmen. Während aus dem vorstehenden einsichtig sein wird, dass dies für Metall-Keramik-Verbindungen nicht zwingend ist, gibt es Materialpaare die so besser oder erstmals verbindbar sind. Auch ist es möglich, anstelle einer Schutzgasumflutung mit inerten oder weitgehend inerten Gasen eine Spülung bzw. Umflutung mit reaktiven Fluiden vorzunehmen, etwa um eine Verbindung durch chemischen Angriff der erwärmten Oberfläche zu begünstigen oder dergl. Dies gilt wiederum für alle Materialpaarungen.

## Patentansprüche

1. Verfahren zur Herstellung einer im Gebrauch wiederholt thermisch hochzyklierten Keramik-Metall-Verbindung, bei welchem Metall und Keramik flächig miteinander verlötet werden, **dadurch gekennzeichnet, dass** Metall und Keramik kontrolliert gegeneinander angeordnet werden,
indem
vor substantieller Loterweichung
die Metall-Keramik-Teile
mit einem Stempel
gegeneinander gepresst werden
und
bei Erweichung des Lotes
der Stempel
wegekontrolliert positioniert wird,
um so
die kontrollierte Gegeneinanderanordnung
von Metall und Keramik
zu erreichen.

2. Verfahren nach dem vorhergehenden Anspruch, **dadurch gekennzeichnet, dass** als Metall eines aus Aluminium, Nickel, Zink, Silber, Kupfer, Gold, eine Kombination und/oder Legierungen davon, insbesondere Messing, ausgewählt wird.

3. Verfahren nach einem der vorhergehenden Ansprüche, **dadurch gekennzeichnet, dass** als Keramik eine Oxid- oder Karbidkeramik ausgewählt wird und/oder eine leitfähige Keramik ausgewählt wird, wobei bevorzugt Siliziumkarbid als Keramik ausgewählt wird.

4. Verfahren nach einem der vorhergehenden Ansprüche, **dadurch gekennzeichnet, dass** der Metall-Keramik-Übergang durch Widerstandsheizen, insbesondere durch direktes Widerstandsheizen erwärmt wird, wobei bevorzugt der Strom unmittelbar durch den zu erwärmenden Metall-Keramik-Übergang geschickt wird.

5. Verfahren nach einem der vorhergehenden Ansprüche, **dadurch gekennzeichnet, dass** ein Aktivlot verwendet wird.

6. Verfahren nach einem der vorhergehenden Ansprüche, **dadurch gekennzeichnet, dass** der Stempel bei Erweichung des Lotes wegekontrolliert positioniert wird, um die kontrollierte Gegeneinanderanordnung von Metall und Keramik so zu erreichen und die Metall-Keramik-Teile in einer gegebenen, insbesondere wegekontrolliert bestimmten Position zum Erkalten gebracht werden.

7. Verfahren nach einem der vorhergehenden Ansprüche, **dadurch gekennzeichnet, dass** die Verbindungsstelle in Schutzgas geflutet wird.

8. Verfahren nach einem der vorhergehenden Ansprüche, **dadurch gekennzeichnet, dass** ein Siliziumkarbidglühzünder hergestellt wird.

## Claims

1. Method for producing a ceramic-metal-connection that is repeatedly subjected to large thermic cycles during use, in which metal and ceramic are brazed to one another two-dimensionally, **characterized in that** metal and ceramic are arranged against one another in a controlled manner
by
pressing the metal-ceramic parts against one another with a ram
prior to substantial softening of the brazing solder
and
positioning
the ram
in a displacement-controlled manner on softening of the brazing solder
so as to achieve the controlled arrangement of metal and ceramic against one another.

2. Method according to the previous claim, **characterized in that** one of aluminum, nickel, zinc, silver, copper, gold, a combination and/or alloys thererof, in particular brass, is selected as the metal.

3. Method according to one of the preceding claims, **characterized in that** an oxide ceramic or a carbide ceramic is selected as the ceramic and/or a conductive ceramic is selected, preferably selecting silicon carbide as the ceramic.

4. Method according to one of the preceding claims, **characterized in that** the metal-ceramic transition is heated by resistance heating, in particular by direct resistance heating, the current preferably being sent directly through the metal-ceramic transition to be heated.

5. Method according to one of the preceding claims, **characterized in that** an active brazing solder is used.

6. Method according to one of the preceding claims, **characterized in that** the ram is positioned in a displacement-controlled manner on softening of the brazing solder, so as to achieve the controlled arrangement of the metal and ceramic against one another,
and the metal-ceramic-parts are made to cool down in a given position, in particular a position determined in a displacement-controlled manner.

7. Method according to one of the preceding claims, **characterized in that** the connecting location is flooded with shielding gas.

8. Method according to one of the preceding claims wherein a silicon carbide hot-surface igniter is produced.

## Revendications

1. Procédé de réalisation d'une liaison céramique-métal qui est cyclée thermiquement à plusieurs reprises en cours d'utilisation, procédé dans lequel le métal et la céramique sont soudés l'un à l'autre de manière sensiblement bidimensionnelle, **caractérisé en ce que** le métal et la céramique sont disposés l'un contre l'autre de manière commandée du fait que, avant un ramollissement substantiel de la soudure, les pièces métal-céramique sont pressées les unes contre les autres avec un piston et, lorsque la soudure se ramollit, le piston est positionné de manière commandée en termes de trajet, afin de réaliser la juxtaposition commandée du métal et de la céramique.

2. Procédé selon la revendication précédente, **caractérisé en ce que** le métal choisi est l'un parmi l'aluminium, le nickel, le zinc, l'argent, le cuivre, l'or, une combinaison de ceux-ci et/ou des alliages de ceux-ci, en particulier le laiton.

3. Procédé selon l'une des revendications précédentes, **caractérisé en ce que** la céramique choisie est une céramique oxydée ou carburée et/ou une céramique conductrice, le carbure de silicium étant de préférence choisi comme céramique.

4. Procédé selon l'une des revendications précédentes, **caractérisé en ce que** la transition métal-céramique est chauffée par chauffage par résistance, notamment par chauffage direct par résistance, le courant étant de préférence envoyé directement à travers la transition métal-céramique à chauffer.

5. Procédé selon l'une des revendications précédentes, **caractérisé en ce qu'**une soudure active est utilisée.

6. Procédé selon l'une des revendications précédentes, **caractérisé en ce que** le piston est positionné de manière commandée lorsque la soudure se ramollit afin de réaliser la juxtaposition commandée du métal et de la céramique de telle sorte que les pièces métal-céramique soient amenées à refroidir dans une position donnée, notamment de manière commandée en termes de trajet.

7. Procédé selon l'une des revendications précédentes, **caractérisé en ce que** le point de liaison est inondé de gaz protecteur.

8. Procédé selon l'une des revendications précédentes, **caractérisé en ce qu'**un amorceur à incandescence au carbure de silicium est réalisé.
